# EUROPEAN PATENT APPLICATION

(11) **EP 2 581 613 A1**
(43) Date of publication of application: **17.04.2013**
(21) Application number: 11792419.1
(22) Date of filing: 06.06.2011
(51) Int. Cl.: F16C 11/10, F16C 11/04

(54) **HINGE DEVICE**

(30) Priority: 09.06.2010 JP 2010131564
(71) Applicant: Mitsubishi Steel MFG. CO., LTD., Chuo-ku Tokyo 104-8550 (JP)
(72) Inventor: HIRANO, Yoshihisa, Ichihara-shi Chiba 290-0067 (JP)
(74) Representative: Regimbeau
(86) International application number: PCT/JP2011/062974
(87) International publication number: WO 2011/155462

(57) **Abstract**

A hinge device includes a shaft, a rotary cam, a fixed cam, and an elastic part that causes a side surface of the rotary cam to contact a side surface of the fixed cam. The side surface of the rotary cam includes a rotation-side reference surface, a rotation-side lower surface part, a rotation-side higher surface part, and an engaging recess. The side surface of the fixed cam includes a fixed-side reference surface, a fixed-side higher surface part, a fixed-side lower surface part, and an engaging protrusion. When the rotation-side lower surface part engages the fixed-side higher surface part, the engaging recess engages the engaging protrusion. When the rotation-side lower surface part is disengaged from the fixed-side higher surface part, the fixed-side higher surface part is in sliding contact with the rotation-side reference surface and the engaging protrusion is in sliding contact with the rotation-side higher surface part.

## Description

### TECHNICAL FIELD

The present invention generally relates to a hinge device. More particularly, the present invention relates to a hinge device used as a folding mechanism of an electronic apparatus such as a notebook personal computer.

### BACKGROUND ART

An electronic apparatus such as a cell phone or a notebook personal computer often includes a main unit and a cover unit that is rotatable relative to the main unit. In such an electronic apparatus, a hinge device is typically used to connect the main unit and the cover unit to each other. Here, a hinge device used for a portable electronic device needs to be configured such that the cover unit does not easily open with respect to the main unit. Also, when a liquid crystal display is provided in the cover unit, a hinge device needs to be configured such that the cover unit can be held at a given angle (i.e., can be tilted) with respect to the main unit to improve the visibility of the liquid crystal display.

A related-art hinge device designed to meet such demands includes a first cam having protrusions and a second cam facing the first cam and having recesses that engage the protrusions. For example, the first cam of the proposed hinge device is connected to a main unit and the second cam is connected to a cover unit.

The related-art hinge device is configured such that the protrusions of the first cam engage the recesses of the second cam at a position where the cover unit is closed with respect to the main unit and at a position where the cover unit is tilted at an angle at which a liquid crystal display is clearly visible. With this configuration, torque increases as the protrusion of the first cam enters the recess of the second cam (stopper effect) so that drawing force is generated. This in turn makes it possible to restrict the rotation of the cover unit relative to the main unit (Patent document 1). The drawing force also makes it possible to prevent the cover unit from rattling with respect to the main unit.

Here, the angle at which a liquid crystal display can be clearly visible may vary depending on the user. In another proposed hinge device, the number of recesses and protrusions are increased so that the cover unit can be tilted at multiple angles with respect to the main unit.

### [RELATED-ART DOCUMENTS]

### [Patent Document]

[Patent document 1] Japanese Laid-Open Patent Publication No. 2003-120656

### DISCLOSURE OF INVENTION

### PROBLEMS TO BE SOLVED BY THE INVENTION

Meanwhile, there is a demand for an electronic apparatus that is configured such that a cover unit engages a main unit only at a closed position where the cover unit is closed with respect to the main unit, and the cover unit can be held at any angle or position other than the closed position within a range of 360 degrees with respect to the main unit.

A hinge device designed for such an electronic apparatus may include a first cam having one protrusion and a second cam having one recess, and the protrusion and the recess may be formed such that they engage each other at a position where the cover unit is closed with respect to the main unit.

With this configuration, although the cover unit does not rattle when the protrusion and the recess engage each other, the single protrusion of the first cam slides on the flat surface of the second cam, i.e., parts other than the recess, when the protrusion is out of the recess. Accordingly, a wide space is formed between the first cam and the second cam, and the first cam and the second cam may tilt with respect to each other on a contact point between the protrusion and the flat surface. As a result, the rotational movement of the hinge device may become irregular. When the operation of the hinge device is not smooth, it is not possible to smoothly open the cover unit with respect to the main unit.

One object of the present invention is to provide a hinge device that can stably operate without rattling.

### MEANS FOR SOLVING THE PROBLEMS

In an aspect of this disclosure, there is provided a hinge device that includes a shaft; a rotary cam mounted on the shaft to be movable in the direction of the axis of the shaft and rotatable about the axis of the shaft; a fixed cam mounted on the shaft to be movable in the direction of the axis of the shaft and not rotatable relative to the shaft; and an elastic part disposed coaxially with the shaft and configured to cause a side surface of the rotary cam and a side surface of the fixed cam to contact each other.

The side surface of the rotary cam includes a substantially-circular rotation-side reference surface, a rotation-side lower surface part that is formed in a portion of the rotation-side reference surface and lower than the rotation-side reference surface, a substantially-circular rotation-side higher surface part that is formed at a periphery of the rotation-side reference surface and higher than the rotation-side reference surface, and an engaging recess formed in a portion of the rotation-side higher surface part such that the engaging recess is positioned opposite the rotation-side lower surface part with respect to the axis of the shaft and has the same height as the rotation-side reference surface.

The side surface of the fixed cam includes a substantially-circular fixed-side reference surface, a fixed-side higher surface part that is formed in a portion of the fixed-side reference surface and higher than the fixed-side reference surface, a substantially-circular fixed-side lower surface part that is formed at the periphery of the fixed-side reference surface and is lower than the fixed-side reference surface, and an engaging protrusion formed in a portion of the fixed-side lower surface part such that the engaging protrusion is positioned opposite the fixed-side higher surface part with respect to the axis of the shaft and has the same height as the fixed-side reference surface.

In an engaging state where the rotation-side lower surface part engages the fixed-side higher surface part, the engaging recess engages the engaging protrusion. In a disengaged state where the rotation-side lower surface part is disengaged from the fixed-side higher surface part, the fixed-side higher surface part is in sliding contact with the rotation-side reference surface and the engaging protrusion is in sliding contact with the rotation-side higher surface part.

### ADVANTAGEOUS EFFECT OF THE INVENTION

Embodiments of the present invention make it possible to provide a hinge device that can stably operate without rattling.

### BRIEF DESCRIPTION OF THE DRAWINGS

FIG. 1 is a cut-away view of a hinge device according to an embodiment;
FIG. 2A is a left side view of a hinge device according to an embodiment;
FIG. 2B is a front view of a hinge device according to an embodiment;
FIG. 2C is a right side view of a hinge device according to an embodiment;
FIG. 3 is a plan view of a rotary cam of a hinge device according to an embodiment;
FIG. 4 is a perspective view of a rotary cam of a hinge device according to an embodiment;
FIG. 5 is a plan view of a fixed cam of a hinge device according to an embodiment;
FIG. 6 is a perspective view of a fixed cam of a hinge device according to an embodiment;

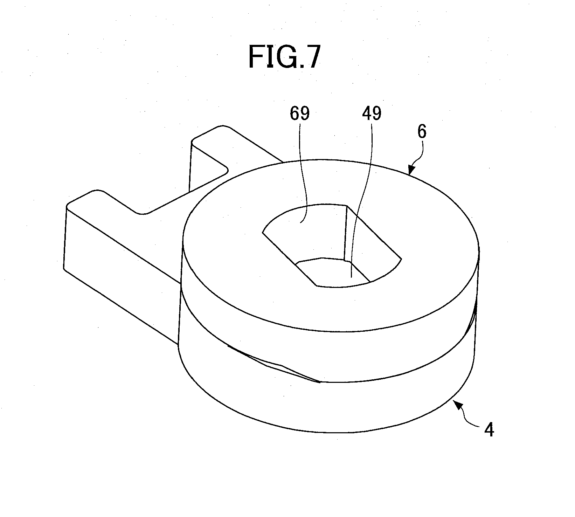

FIG. 7 is a perspective view of a rotary cam and a fixed cam coupled together;
FIG. 8 is a drawing used to describe operations of a hinge device according to an embodiment; and
FIG. 9 is a drawing illustrating an electronic apparatus including a hinge device according to an embodiment.

### DESCRIPTION OF EMBODIMENTS

Preferred embodiments of the present invention are described below with reference to the accompanying drawings.

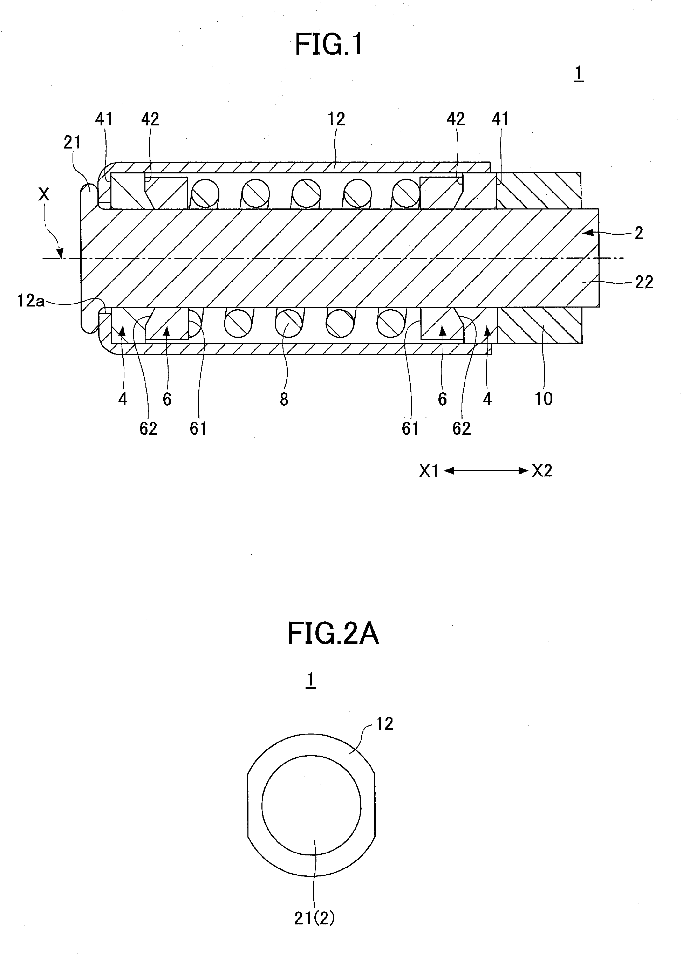

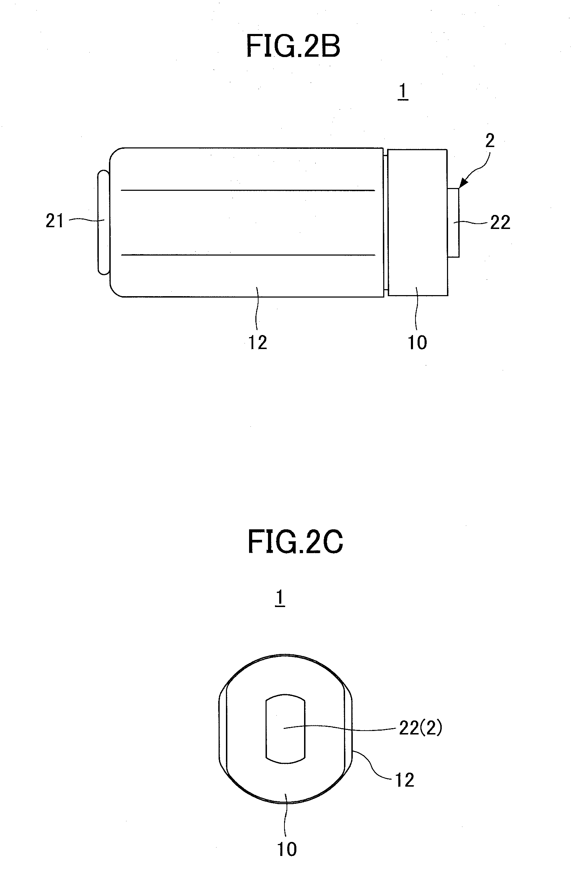

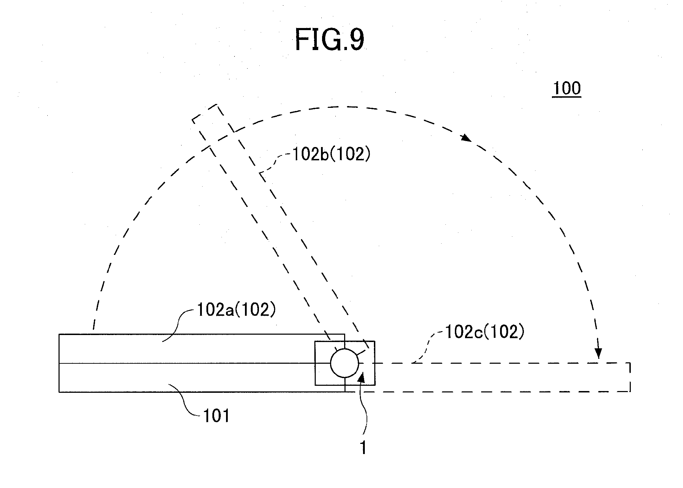

FIGs. 1 and 2A-2C illustrate a hinge device 1 according to an embodiment. FIG. 1 is a cut-away view of the hinge device 1, and FIGs. 2A-2C illustrate the external appearance of the hinge device 1. For example, the hinge device 1 is used as a joint to rotatably couple a cover unit 102 to a main unit 101 of an electronic apparatus 100 as illustrated in FIG. 9. Examples of the electronic apparatus 100 may include a cell phone and a notebook personal computer (in FIG. 9, the electronic apparatus 100 is illustrated as a cell phone).

The hinge device 1 includes a shaft 2, rotary cams 4, fixed cams 6, a spring 8, a head 10, and a case 12.

The shaft 2 includes a flange 21 disposed at the left end in FIGs. 1 and 2B and an oval-shaped part 22 having an oval-shaped cross section and extending to the right from the flange 21 in FIGs. 1 and 2B. The flange 21 and the oval-shaped part 22 are formed as a monolithic part. The shaft 2 is inserted into the case 12.

The case 12 is shaped like a cylinder with a bottom, and a hole 12a is formed in the bottom of the case 12. The shaft 2 is inserted through the hole 12a into the case 12. The diameter of the flange 21 is greater than the diameter of the hole 12a. When the shaft 2 is inserted into the case 12, the flange 21 contacts the bottom of the case 12 and the position of the shaft 2 is thereby determined.

The rotary cams 4 and the fixed cams 6 are mounted on the shaft 2. In the present embodiment, one rotary cam 4 and one fixed cam 6 are paired, and two pairs of the rotary cam 4 and the fixed cam 6 are provided. More specifically, the rotary cams 4, the fixed cams 6, and the spring 8 are placed in the case 12 with the shaft 2 inserted through their openings such that the spring 8 is sandwiched between two pairs of the rotary cam 4 and the fixed cam 6.

Each pair of the rotary cam 4 and the fixed cam 6 are arranged such that the rotary cam 4 is disposed at the outer side and the fixed cam 6 is disposed at the inner side. An outer surface 41 of the rotary cam 4 on the left side in FIG. 1 is in contact with the bottom of the case 12, and an outer surface 41 of the rotary cam 4 on the right side is in contact with the head 10. The fixed cams 6 attached to the shaft 2 on the right and left sides are pressed by the elastic force of the spring 8 against the corresponding rotary cams 4. As a result, fixed-side reference surfaces 63 of the fixed cams 6 are pressed against inner surfaces 42 of the corresponding rotary cams 4. Detailed configurations of the rotary cams 4 and the fixed cams 6 are described later.

The head 10 is fixed to an end of the shaft 2 that is opposite the end of the shaft 2 at which the flange 21 is formed. Accordingly, the head 10 rotates along with the shaft 2. The head 10 prevents the outer surface 41, the inner surface 42, and the spring 8 from being detached from the shaft 2. With the hinge device 1 configured as described above, for example, the head 10 is fixed to the cover unit 102 and the case 12 is fixed to the main unit 101 of the electronic apparatus 100 illustrated in FIG. 9.

Configurations of the rotary cams 4 and the fixed cams 6 are described below in more detail.

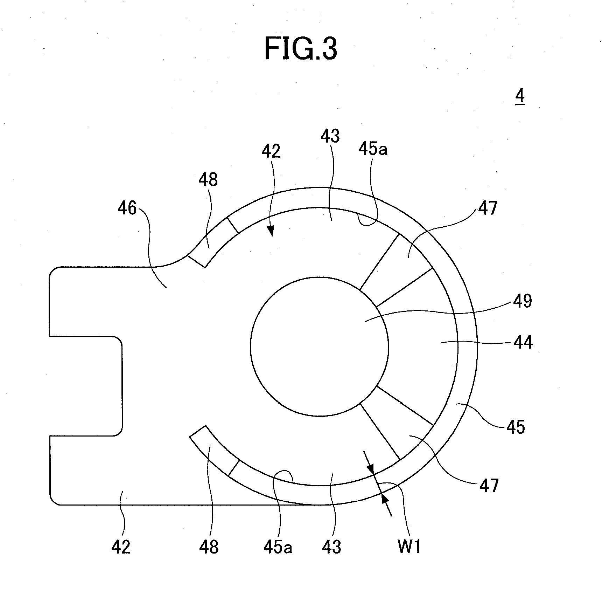

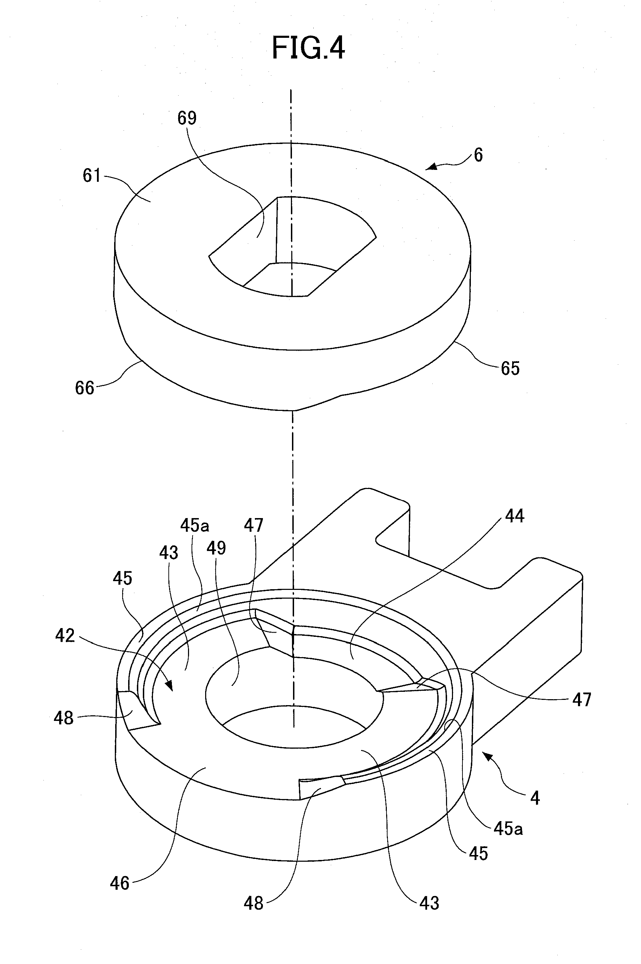

FIGs. 3 and 4 are drawings used to describe the rotary cam 4. FIG. 3 is a plan view illustrating the inner surface 42 of the rotary cam 4, and FIG. 4 is a perspective view illustrating the rotary cam 4 facing the fixed cam 6.

The inner surface 42 of the rotary cam 4 includes a rotation-side reference surface 43, a rotation-side lower surface part 44, a rotation-side higher surface part 45, and an engaging recess 46. An insertion hole 49 for inserting the shaft 2 is formed in the center of the inner surface 42.

The rotation-side reference surface 43 has a substantially circular shape. The rotation-side lower surface part 44 is formed in a portion of the rotation-side reference surface 43, and is lower than (or recessed from) the rotation-side reference surface 43. The rotation-side lower surface part 44 is lower than (or recessed from) the rotation-side reference surface 43 by, for example, 0.35 mm. Only one rotation-side lower surface part 44 is formed in the substantially-circular rotation-side reference surface 43.

Sloping surfaces 47 are formed at the boundaries between the rotation-side lower surface part 44 and the rotation-side reference surface 43. As is described later, a fixed-side higher surface part 64 of the fixed cam 6 moves along the rotation-side reference surface 43 and the rotation-side lower surface part 44. The sloping surfaces 47 formed at the boundaries between the rotation-side reference surface 43 and the rotation-side lower surface part 44 having different heights allow the fixed-side higher surface part 64 to move smoothly at the boundaries.

The rotation-side higher surface part 45 has a substantially circular shape and is formed at the periphery of the rotation-side reference surface 43 and the rotation-side lower surface part 44. The rotation-side higher surface part 45 is higher than (or protrudes from) the rotation-side reference surface 43. The rotation-side higher surface part 45 is higher than (or protrudes from) the rotation-side reference surface 43 by, for example, 0.35 mm. Thus, the difference in height between the rotation-side reference surface 43 and the rotation-side lower surface part 44 equals the difference in height between the rotation-side reference surface 43 and the rotation-side higher surface part 45.

The engaging recess 46 is formed at a predetermined position in the rotation-side higher surface part 45. In a sense, the engaging recess 46 is formed by removing a portion of the substantially-circular rotation-side higher surface part 45. The height of the engaging recess 46 is the same as the height of the rotation-side reference surface 43. In other words, the rotation-side reference surface 43 is flush with the engaging recess 46.

The engaging recess 46 configured as described above is disposed opposite the rotation-side lower surface part 44 with respect to the center of the insertion hole 49. In other words, when the shaft 2 is inserted into the insertion hole 49, the engaging recess 46 is positioned opposite the rotation-side lower surface part 44 with respect to an axis X of the shaft 2. Accordingly, the rotation-side lower surface part 44 and the engaging recess 46 are disposed apart from each other by 180 degrees.

Sloping surfaces 48 are formed at the boundaries between the rotation-side higher surface part 45 and the engaging recess 46. As is described later, an engaging protrusion 66 of the fixed cam 6 moves along the rotation-side higher surface part 45 and the engaging recess 46. The sloping surfaces 48 formed at the boundaries between the rotation-side higher surface part 45 and the engaging recess 46 having different heights allow the engaging protrusion 66 to move smoothly at the boundaries.

The rotary cams 4 are placed in the case 12 so as to rotate along with the case 12. More specifically, the rotary cams 4 are placed in the case 12 with the shaft 2 inserted through the insertion holes 49. While the shaft 2 has an oval-shaped cross section, the insertion holes 49 of the rotary cams 4 have a circular shape. Therefore, the rotary cams 4 can rotate relative to the shaft 2. Also, the rotary cams 4 are configured to be able to move in the direction of the axis of the shaft 2 (indicated by arrows X1 and X2 in FIG. 1) in the case 12.

Next, the fixed cams 6 are described.

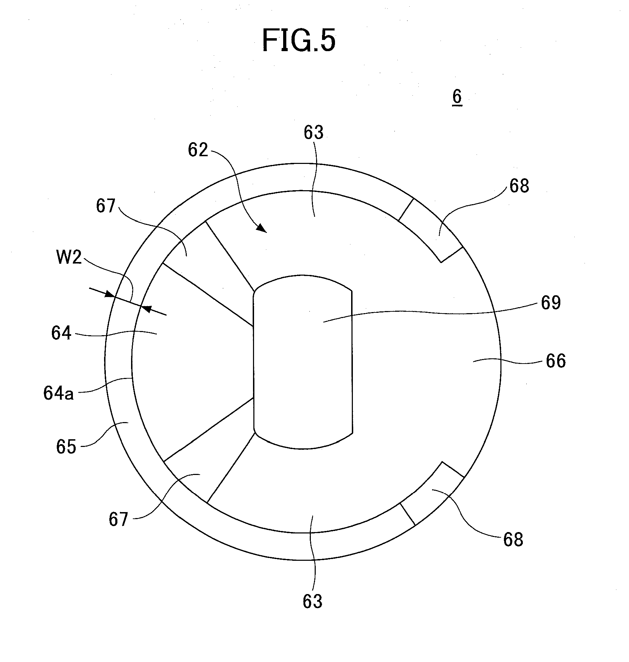

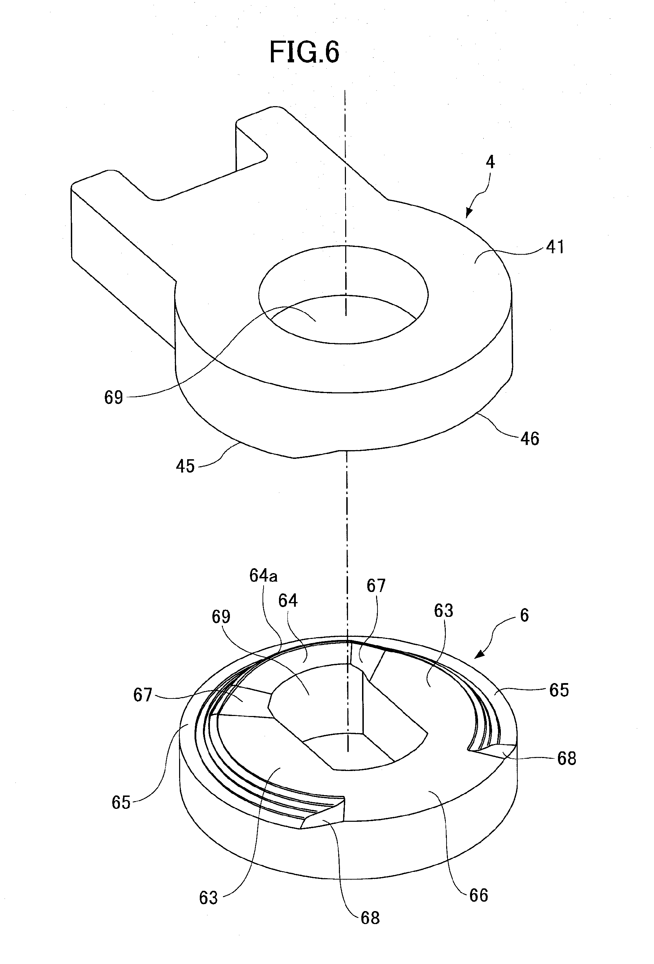

FIGs. 5 and 6 are drawings used to describe the fixed cam 6. FIG. 5 is a plan view illustrating an inner surface 62 of the fixed cam 6, and FIG. 6 is a perspective view illustrating the fixed cam 6 facing the rotary cam 4.

The inner surface 62 of the fixed cam 6 includes a fixed-side reference surface 63, a fixed-side higher surface part 64, a fixed-side lower surface part 65, and an engaging protrusion 66. An oval-shaped hole 69 for inserting the shaft 2 is formed in the center of the inner surface 62.

The fixed-side reference surface 63 has a substantially circular shape. The fixed-side higher surface part 64 is formed in a portion of the fixed-side reference surface 63, and is higher than (or protrudes from) the fixed-side reference surface 63. The fixed-side higher surface part 64 is higher than (or protrudes from) the fixed-side reference surface 63 by, for example, 0.35 mm. Only one fixed-side higher surface part 64 is formed in the substantially-circular fixed-side reference surface 63.

Also, the fixed-side higher surface part 64 has a shape that matches the shape of the rotation-side lower surface part 44 of the rotary cam 4. More specifically, the fixed-side higher surface part 64 is configured to engage the rotation-side lower surface part 44 when the rotary cam 4 rotates relative to the fixed cam 6 to a position where the fixed-side higher surface part 64 faces the rotation-side lower surface part 44.

Sloping surfaces 67 are formed at the boundaries between the fixed-side higher surface part 64 and the fixed-side reference surface 63. The inclination angle of the sloping surfaces 67 corresponds to the inclination angle of the sloping surfaces 47 of the rotary cam 4.

When the fixed-side higher surface part 64 rotates and reaches a boundary between the rotation-side reference surface 43 and the rotation-side lower surface part 44, the sloping surface 67 smoothly engages the sloping surface 47 and the fixed-side higher surface part 64 can continue to rotate smoothly. This configuration allows the fixed-side higher surface part 64 to smoothly enter the rotation-side lower surface part 44 and to smoothly move out of the rotation-side lower surface part 44 at the boundaries between the rotation-side reference surface 43 and the rotation-side lower surface part 44 having different heights.

The fixed-side lower surface part 65 has a substantially circular shape and is formed at the periphery of the fixed-side reference surface 63 and the fixed-side higher surface part 64. The fixed-side lower surface part 65 is lower than (or recessed from) the fixed-side reference surface 63. The width (indicated by W2 in FIG. 6) of the fixed-side lower surface part 65 is the same as the width (indicated by W1 in FIG. 3) of the rotation-side higher surface part 45. The fixed-side lower surface part 65 is lower than (or recessed from) the fixed-side reference surface 63 by, for example, 0.35 mm.

Thus, the difference in height between the fixed-side reference surface 63 and the fixed-side higher surface part 64 equals the difference in height between the fixed-side reference surface 63 and the fixed-side lower surface part 65.

The engaging protrusion 66 is formed at a predetermined position in the fixed-side lower surface part 65. In a sense, the engaging protrusion 66 is formed by raising a portion of the substantially-circular fixed-side lower surface part 65. The height of the engaging protrusion 66 is the same as the height of the fixed-side reference surface 63. In other words, the fixed-side reference surface 63 is flush with the engaging protrusion 66.

The engaging protrusion 66 configured as described above is disposed opposite the fixed-side higher surface part 64 with respect to the center of the oval-shaped hole 69. That is, when the shaft 2 is inserted into the oval-shaped hole 69, the engaging protrusion 66 is positioned opposite the fixed-side higher surface part 64 with respect to the axis X of the shaft 2. Accordingly, the fixed-side lower surface part 64 and the engaging protrusion 66 are disposed apart from each other by 180 degrees.

Sloping surfaces 68 are formed at the boundaries between the fixed-side lower surface part 65 and the engaging protrusion 66. The inclination angle of the sloping surfaces 68 corresponds to the inclination angle of the sloping surfaces 48 of the rotary cam 4.

When the fixed-side lower surface part 65 rotates and reaches a boundary between the rotation-side higher surface part 45 and the engaging recess 46, the sloping surface 68 smoothly engages the sloping surface 48 and the engaging protrusion 66 can continue to rotate smoothly. This configuration allows the engaging protrusion 66 to smoothly enter the engaging recess 46 and to smoothly move out of the engaging recess 46 at the boundaries between the rotation-side higher surface part 45 and the engaging recess 46 having different heights.

The fixed cams 6 are placed in the case 12 so as to rotate together with the head 10. More specifically, the fixed cams 6 are placed in the case 12 with the shaft 2 inserted through the oval-shaped holes 49. The oval-shaped hole 69 has an oval shape that matches the oval shape of the cross section of the shaft 2. With this configuration, the fixed cams 6 are not able to rotate with respect to the shaft 2. However, the fixed cams 6 are configured to be able to move in the direction of the axis of the shaft 2 (indicated by arrows X1 and X2 in FIG. 1) in the case 12.

The inner surfaces 42 and 62 of each pair of the rotary cam 4 and the fixed cam 6 are pressed against each other by the spring 8. Since the shaft 2 is inserted into the spring 8, the shaft 2 and the spring 8 are disposed coaxially. The elastic force of the spring 8 causes friction (torque) between the inner surfaces 42 and 62.

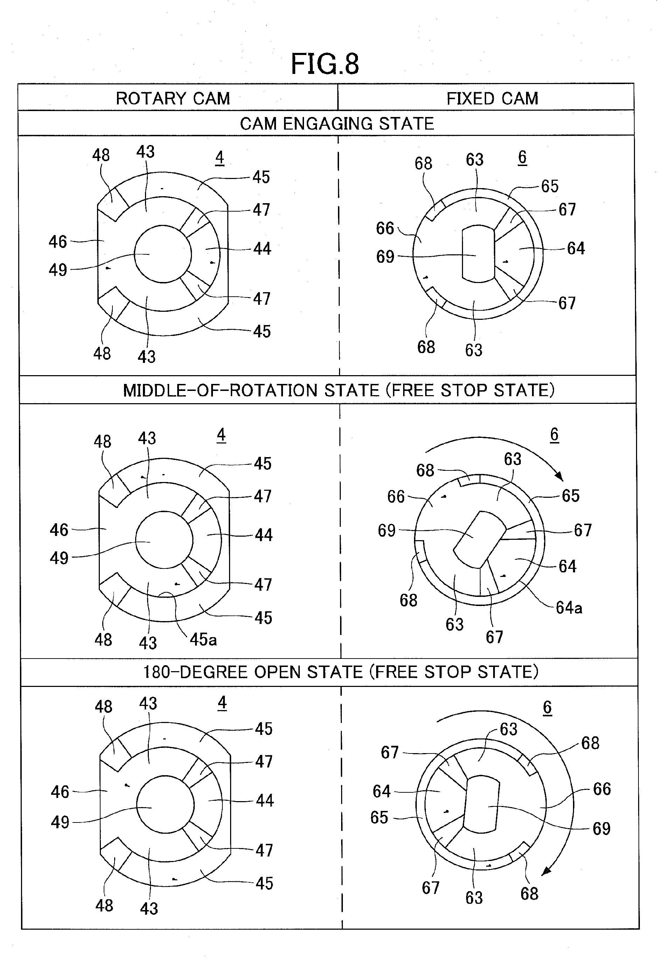

Next, operations of the hinge device 1 are described with reference to FIG. 8. Since the hinge device 1 of the present embodiment has distinctive features in the rotary cams 4 and the fixed cams 6, operations of the rotary cams 4 and the fixed cams 6 are mainly described below.

FIG. 8 (A) illustrates a state (hereafter referred to as a "cam engaging state") where the rotation-side lower surface part 44 of the rotary cam 4 engages the fixed-side higher surface part 64 of the fixed cam 6. FIG. 9 illustrates the rotary cam 4 and the fixed cam 6 in the cam engaging state.

In the cam engaging state, the rotation-side lower surface part 44 engages the fixed-side higher surface part 64, the engaging protrusion 66 engages the engaging recess 46, and also the rotation-side reference surface 43 is in contact with the fixed-side reference surface 63.

The hinge device 1 is preferably configured such that the rotary cam 4 and the fixed cam 6 are in the cam engaging state at a position where the cover unit 102 is closed with respect to the main unit 101 as indicated by "102a" in FIG. 9 (this position is hereafter referred to as a "closed position"). This configuration makes it possible to produce a so-called "drawing effect" (an effect that increases torque) at the closed position where the rotation-side lower surface part 44 engages the fixed-side higher surface part 64. This in turn makes it possible to restrict the movement of the cover unit 102a at the closed position and prevent the cover unit 102a from rattling.

In the present embodiment, only one rotation-side lower surface part 44 is formed in the rotary cam 4 and only one fixed-side higher surface part 64 is formed in the fixed cam 6. With this configuration, the drawing effect is produced only once while the fixed-side higher surface part 64 rotates 360 degrees with respect to the rotation-side lower surface part 44. The configuration makes it possible to produce the drawing effect only when the cover unit 102 is closed with respect to the main unit 101 and thereby makes it possible to hold the cover unit 102 at the closed position.

FIG. 8 (B) and FIG. 8 (C) illustrate disengaged states where the fixed-side higher surface part 64 is disengaged from the rotation-side lower surface part 44.

FIG. 8 (B) illustrates a state where the fixed cam 6 is rotated with respect to the rotary cam 4 until the fixed-side higher surface part 64 reaches a position between a cam engaging position corresponding to the cam engaging state and a 180-degree position corresponding to a 180-degree open state (illustrated in FIG. 8 (C)) where the fixed-side higher surface part 64 is rotated 180 degrees from the cam engaging position. In the example of FIG. 8 (B), the fixed cam 6 is rotated with respect to the rotary cam 4 by 45 degrees from the cam engaging position (this state is hereafter referred to as a "middle-of-rotation state").

In the middle-of-rotation state, the fixed-side higher surface part 64 is out of the rotation-side lower surface part 44 and is in sliding contact with the rotation-side reference surface 43. Also in this state, the fixed-side lower surface part 65 is in sliding contact with the engaging recess 46. Further in this state, a periphery part 64a of the fixed-side higher surface part 64 is in sliding contact with an inner wall 45a of the rotation-side higher surface part 45.

FIG. 8 (C) illustrates the 180-degree open state where the fixed cam 6 is rotated with respect to the rotary cam 4 until the fixed-side higher surface part 64 reaches the 180-degree position. Also in the 180-degree open state, the fixed-side higher surface part 64 is out of the rotation-side lower surface part 44 and is in sliding contact with the rotation-side reference surface 43.

In FIG. 9, "102b" indicates a position of the cover unit 102 between the closed position and the 180-degree position. This position corresponds to the middle-of-rotation state of the hinge device 1. Also in FIG. 9, "102c" indicates a position of the cover unit 102 that is substantially level with the main unit 101. This position corresponds to the 180-degree open state of the hinge device 1.

With the hinge device 1 of the present embodiment, the rotary cam 4 and the fixed cam 6 are supported at a first sliding contact position where the fixed-side higher surface part 64 is in sliding contact with the rotation-side reference surface 43 and at a second sliding contact position where the fixed-side lower surface 65 is in sliding contact with the engaging recess 46 even when the hinge device 1 is in the middle-of-rotation state or the 180-degree open state. This configuration makes it possible to prevent the rotary cam 4 and the fixed cam 6 from rattling and enables the rotary cam 4 and the fixed cam 6 to rotate smoothly with respect to each other even when the hinge device 1 is in the middle-of-rotation state.

Also according to the present embodiment, the periphery part 64a of the fixed-side higher surface part 64 is in sliding contact with the inner wall 45a of the rotation-side higher surface part 45 (which is referred to as a third sliding contact position) when the hinge device 1 is in the middle-of-rotation state. Accordingly, the relative rotation of the rotary cam 4 and the fixed cam 6 is supported not only at the first and second sliding contact positions but also at the third contact position. This configuration makes it possible to more reliably prevent rattling and enables the rotary cam 4 and the fixed cam 6 to more stably rotate relative to each other when the hinge device 1 is in the middle-of-rotation state.

Also with the above configuration, even when the fixed-side higher surface part 64 is out of the rotation-side lower surface part 44, i.e., when the hinge device 1 is in the middle-of-rotation state or the 180-degree open state, the fixed-side higher surface part 64 is pressed against the rotation-side reference surface 43 and the engaging protrusion 66 is pressed against and in sliding contact with the rotation-side higher surface part 45 by the elastic force of the spring 8. Accordingly, frictional force is generated between the fixed-side higher surface part 64 and the rotation-side reference surface 43 and between the engaging protrusion 66 and the rotation-side higher surface part 45.

When the hinge device 1 is used for the electronic apparatus 100, this frictional force makes it possible to freely stop the cover unit 102 at any rotational angle with respect to the main unit 101. When, for example, a liquid crystal display is provided in the cover unit 102, this configuration makes it possible to hold the liquid crystal display at any rotational angle that provides good visibility.

The above embodiment provides a hinge device including a rotary cam and a fixed cam that engage each other only at one position during the 360 degree rotation but can still stably operate without rattling.

Preferred embodiments of the present invention are described above. However, the present invention is not limited to the specifically disclosed embodiments, and variations and modifications may be made without departing from the scope of the present invention.

The present international application claims priority from Japanese Patent Application No. 2010-131564 filed on June 9, 2010, the entire contents of which are hereby incorporated herein by reference.

### EXPLANATION OF REFERENCES

1 Hinge device
2 Shaft
21 Flange
22 Oval-shaped part
4 Rotary cam
43 Rotation-side reference surface
44 Rotation-side lower surface part
45 Rotation-side higher surface part
46 Engaging recess
47, 48 Sloping surface
49 Insertion hole
6 Fixed cam
63 Fixed-side reference surface
64 Fixed-side higher surface part
65 Fixed-side lower surface part
66 Engaging protrusion
67, 68 Sloping surface
69 Oval-shaped hole
8 Spring
10 Head
12 Case
100 Electronic apparatus
101 Main unit
102 Cover unit

## Claims

1. A hinge device, comprising:
a shaft;
a rotary cam mounted on the shaft to be movable in a direction of an axis of the shaft and rotatable about the axis of the shaft;
a fixed cam mounted on the shaft to be movable in the direction of the axis of the shaft and not rotatable relative to the shaft; and
an elastic part disposed coaxially with the shaft and configured to cause a side surface of the rotary cam and a side surface of the fixed cam to contact each other,
wherein the side surface of the rotary cam includes
a substantially-circular rotation-side reference surface,
a rotation-side lower surface part that is formed in a portion of the rotation-side reference surface and lower than the rotation-side reference surface,
a substantially-circular rotation-side higher surface part that is formed at a periphery of the rotation-side reference surface and higher than the rotation-side reference surface, and
an engaging recess formed in a portion of the rotation-side higher surface part such that the engaging recess is positioned opposite the rotation-side lower surface part with respect to the axis of the shaft and has a same height as the rotation-side reference surface;
wherein the side surface of the fixed cam includes
a substantially-circular fixed-side reference surface,
a fixed-side higher surface part that is formed in a portion of the fixed-side reference surface and higher than the fixed-side reference surface,
a substantially-circular fixed-side lower surface part that is formed at a periphery of the fixed-side reference surface and is lower than the fixed-side reference surface, and
an engaging protrusion formed in a portion of the fixed-side lower surface part such that the engaging protrusion is positioned opposite the fixed-side higher surface part with respect to the axis of the shaft and has a same height as the fixed-side reference surface;
wherein in an engaging state where the rotation-side lower surface part engages the fixed-side higher surface part, the engaging recess engages the engaging protrusion; and
wherein in a disengaged state where the rotation-side lower surface part is disengaged from the fixed-side higher surface part, the fixed-side higher surface part is in sliding contact with the rotation-side reference surface and the engaging protrusion is in sliding contact with the rotation-side higher surface part.

2. The hinge device as claimed in claim 1, wherein sloping surfaces are formed at boundaries between the rotation-side reference surface and the rotation-side lower surface part, at boundaries between the rotation-side reference surface and the rotation-side higher surface part, at boundaries between the fixed-side reference surface and the rotation-side higher surface part, and at boundaries between the fixed-side reference surface and the fixed-side lower surface part.
